# EUROPEAN PATENT SPECIFICATION

(11) **EP 1 795 874 B1**
(45) Date of publication and mention of the grant of the patent: **30.05.2018**
(21) Application number: 06025124.6
(22) Date of filing: 05.12.2006
(51) Int. Cl.: G01D 11/10, G01D 5/347, G01D 5/244, F16F 15/00, F16F 7/00

(54) **Displacement measuring device**
Wegmesseinrichtung
Capteur de déplacement

(30) Priority: 07.12.2005 JP 2005353694
(43) Date of publication of application: 13.06.2007
(73) Proprietor: Mitutoyo Corporation, Kawasaki-shi, Kanagawa 213-0012 (JP)
(72) Inventor: Kodama, Kazuhiko, Utsunomiya-shi Tochigi 321-0923 (JP)
(74) Representative: Grünecker Patent- und Rechtsanwälte PartG mbB

(56) References cited:
- EP-A1- 0 947 806
- WO-A1-98/23924
- US-A- 4 165 564
- US-A- 4 549 353

## Description

The disclosure of Japanese Patent Application No. 2005-353694 filed on December 7, 2005 including specifications, drawings and claims is incorporated herein by reference in its entirety.

The present invention relates to a displacement measuring device of a vibration machine that vibrates in a direction other than the measuring direction, and more particularly, it relates to a displacement measuring device of a vibration machine that is preferably used when directly controlling the ram position of a press machine by a linear encoder.

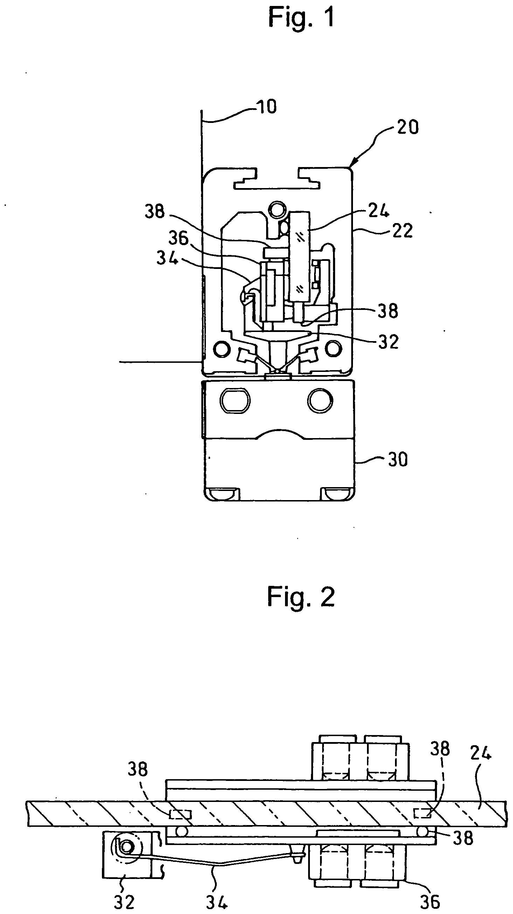

As a device to detect a linear displacement of a relative displacement member of a machine tool, for example, a unit-type linear encoder as described in Japanese Published Unexamined Patent Application No. Sho 58-161810 has been known. With this, as shown in Fig. 1 (transversal sectional view) and Fig. 2 (main-part longitudinal sectional view), a scale unit 20 for which, for example, a transmissive optical scale 24 is held inside a frame 22 having a C-shaped section, fixed to one relative moving member, for example, a machine tool bed 10 and a head 30 fixed to the other relative moving member are provided. Motion of the head 30 is transmitted to a detector 36 via an arm portion 32 and a cantilever spring 34 to press the detector 36 against the scale 24. The detector 36 is guided on the scale 24 by roller bearings 38.

On the other hand, with regard to a vibration machine such as a press machine as well, it has been considered in recent years to enable a stable position control of the ram regardless of a change in load by directly controlling the ram position by a linear encoder (Seiich Hayashi "AC SERVO DRIVE PRESS BRAKE WITH BENDING ANGLE SENSOR," Press Technology, Vol. 42, No. 6, (2004, June Edition) pp 50-53).

WO 98/23924 A1 relates to an optical rule for linear measures incorporating a guide for the carriage of the optical reader and discloses all of the features in the preamble of claim 1.

EP-A-0 947 806 relates to a position detection apparatus that is capable of reducing the bending moment in the longitudinal direction of a recording medium and which is fixed to a machine tool without deforming the main body or the recording medium.

US 4,165,564 relates to an encapsulated measuring device which includes a hollow body, a scale defining a measuring direction, and a sensing unit disposed to move along the scale within the hollow body. An entrainment member is pivotably secured to the sensing unit and extends out of the hollow body.

US 4,549,353 relates to a displacement measuring instrument comprising a main scale secured to a first member and an index scale secured to a second member and reciprocatingly movablv together with the second member along the main scale whereby a relative movement between the first and the second members is measured from a relative movement between the main and the index scales. There are further provided a highly rigid member rotatably engaged at one end thereof with the second member and at the other end thereof with the index scale whereby the second member and the index scale are connected to each other, and a biasing means loaded between the second member and a highly rigid member for urging the index scale against the main scale.

However, when the conventional unit-type linear encoder is attached to a press machine, the detector 36 floats up as the pressing force of the cantilever spring 34 yields to vibration energy at the base side, so that there was a problem with the occurrence of erroneous counting.

The present invention has been made in order to solve the above conventional
problems and an object thereof is to provide a displacement measuring device that is capable of conducting measurement without the occurrence of erroneous counting even for a vibration machine such as a press machine where a large-amplitude vibration occurs in a direction other than the measuring direction.

The present invention has achieved the above object by a displacement measurement device as set forth in claim 1. In particular, displacement measuring device for a vibration machine vibrating in a direction other than a measuring direction is provided with a scale and a linear motion guide which are fixed to one relative displacement member, a detector which is fixed to a slider of the linear motion guide, and a link which freely rotatably couples the slider and the other relative displacement member.

The link freely rotatably coupled to the slider is further made movable so as to tilt in a vertical direction with respect to a rotation surface, so that vibration of the vibration machine such as a press machine in a direction other than the measuring direction can be absorbed by a tilting motion thereof, and/or the link freely rotatably coupled to the other relative displacement member is further movable so as to tilt in a vertical direction with respect to a rotation surface, so that vibration of the vibration machine such as a press machine in a direction other than the measuring direction can be absorbed by a tilting motion thereof.

Moreover, a rod-end bearing joint is provided at least at one end of the link and a rotation angle adjusting joint is provided halfway across the link.

In one embodiment, respective rotation axes of the link freely rotatably coupled to the slider and the other relative displacement member are made in a relationship being roughly orthogonal to each other, so that vibration components of the vibration machine such as a press machine in two orthogonal directions other than the measuring direction can be absorbed. More specifically, the longer link allows absorbing a larger vibration, and d (vibration displacement) ≈ r (link length) x θ (tiltable angle). At this time, when a vibration displacement of d occurs in a condition where the link is parallel with the measuring direction of a linear encoder, the link has a tilt angle of θ=d/r, therefore, an amount δ by which the link is displaced in the measuring direction is δ=tanθ. This δ is a
measurement error.

Moreover, in another embodiment of the present invention, an encoder formed of the scale and detector is provided as an absolute encoder.

According to the present invention, a separate-type linear encoder whose scale and detector are separate is used in place of a unit-type linear encoder, the scale is fixed to one relative displacement member, and the detector is fixed to a slider of a linear motion guide whose rail is fixed to the relative displacement member, therefore, no cantilever spring is necessary, the scale and detector are out of contact with each other, and the detector is coupled to the linear motion guide by a rigid structure, so that relative displacement due to vibration does not occur between the scale and detector until equivalence to the rigidity of the linear motion guide. Consequently, it becomes possible to measure displacement of the vibration machine without the occurrence of erroneous counting due to vibration in a direction other than the measuring direction.

Likewise, even if malfunction of a power supply or an electrical circuit occurs such that an absolute encoder is instantaneously powered off by a sudden impact as with a press machine, the absolute encoder can promptly detect an absolute position by restarting this when having returned to a predetermined position such as a top dead center of the press machine, and this therefore allows the vibration machine such as a press machine to continuously operate even without the necessity of a resetting operation. Moreover, with an absolute encoder, unlike an incremental encoder, there is no such possibility of producing a large amount of defective products as a result of continuously operating a manufacturing apparatus such as a press machine without noticing the occurrence of a miscount, so that a highly reliable manufacturing apparatus can be formed.

The preferred embodiments will be described with reference to the drawings, wherein like elements have been denoted throughout the figures with like reference numerals, and wherein;
Fig. 1 is a transversal sectional view showing a configuration of a conventional unit-type encoder.
Fig. 2 is a longitudinal sectional view showing the main part of the same.
Fig. 3 is a front view showing a configuration of a press machine being an example of an application target of the present invention.
Fig. 4 is a transversal sectional view showing a condition of attachment to a press machine of a first embodiment of the present invention.
Fig. 5 is a front view of the same.
Fig. 6 is a side view of the same.
Fig. 7 is a transversal sectional view showing a condition of attachment to a press machine of a first comparative example which is not part of the present invention.
Fig. 8 is a sectional view showing a spherical joint of the first comparative example.
Fig. 9 is a transversal sectional view showing a condition of attachment to a press machine of a second comparative example which is not part of the present invention.
Fig. 10 is a sectional view showing a spherical joint of the second comparative example. Hereinafter, the embodiment of the present invention will be described with reference to the drawings.

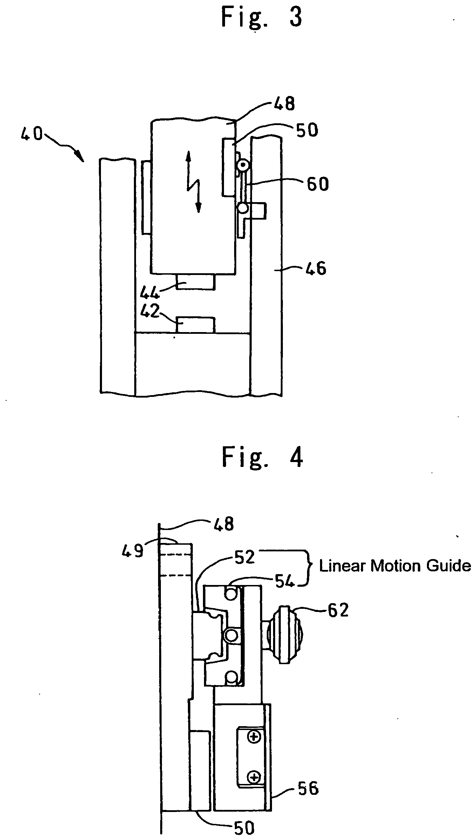

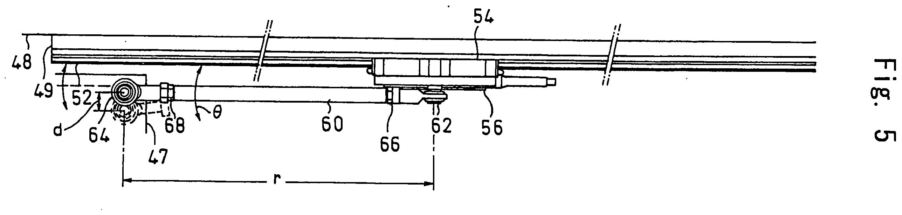

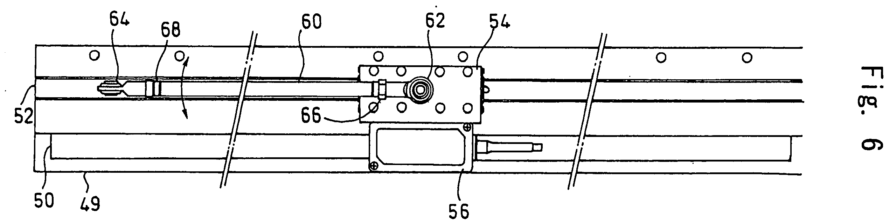

In order to, as shown in Fig. 3, detect displacement of an upper die 44 relative to a lower die 42 of a press machine 40, a displacement measuring device of the embodiment of the present invention is provided as shown in detail in Fig. 4 (transversal sectional view), Fig. 5 (front view), and Fig. 6 (side view), between an upright support 46 and a ram 48 where a large-amplitude relative displacement occurs at the time of press.

More specifically, as shown in Fig. 4, to a ram-side bracket 49 to be attached to the ram 48 of the press machine 40, a reflective scale 50 and a linear motion guide rail 52 are fixed. On the other hand, a detector 56 is fixed to a linear motion guide slider 54 that slides on the rail 52.

Then, the slider 54 is, as clearly shown in Fig. 5 and Fig. 6, coupled to an upright support-side bracket 47 to be attached to the upright support 4 6 of the press machine 40 via a link 60 whose both ends are freely rotatable.

At both ends of the link 60, planar rod-end bearings 62 and 64 are provided as joints, and halfway therethrough, rotation angle adjusting joints 66 and 68 for changing the rod-end bearings 62 and 64 in direction are provided.

In the present embodiment, for example, even if there is vibration as a result of pressing at the upright support 46 side, since the scale 50 is out of contact with the detector 56 and the scale 50 is coupled to the linear motion guide slider 54 by a rigid structure, this is absorbed by a swing of the link 60, so that displacement due to vibration does not occur between the scale 50 and detector 56 until equivalence to the rigidity of the linear motion guide, and erroneous counting does not also occur. In addition, when there is vibration at the ram 48 side, the same effects can be obtained by attaching the scale 50 to the upright support 46 side.

In the present embodiment, since the rod-endbearings 62 and 64 are provided at both ends of the link 60 and the rotation angle adjusting joints 66 and 68 are provided halfway therethrough, attachment is easy.

Next, a first comparative example which is not part of the present invention will be described.

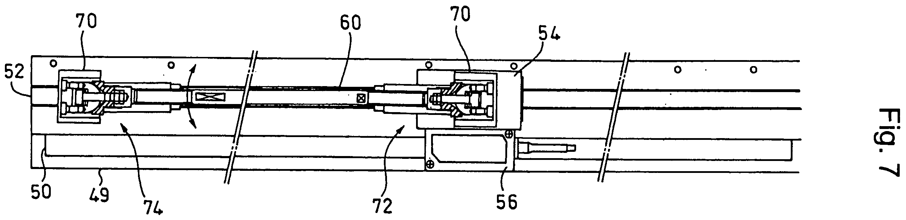

For the first comparative example, as shown in Fig. 7, slide bearing spherical joints 72 and 74 are used as joints at both ends of the link 60 in place
of the rod-end bearings 62 and 64 of the first embodiment so that no rotation angle adjusting joints 66 and 68 are necessary. In the figure, reference numeral 70 denotes a bracket for retaining the spherical joint.

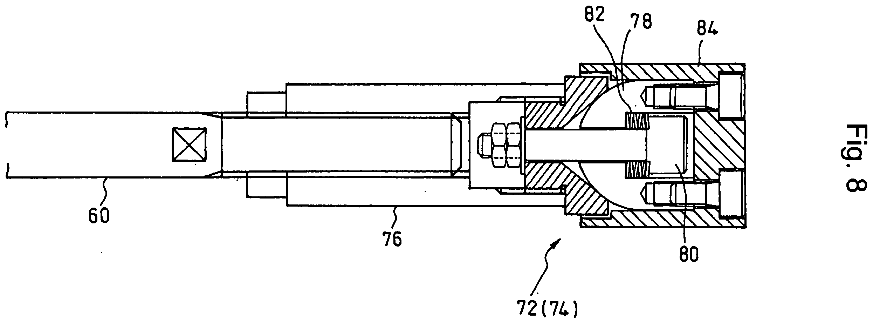

The spherical joint 72, 74 is, as shown in detail in Fig. 8, composed mainly of a seat 76 screwed on the end portion of the link 60, a hemispheroidal portion 78 mating with a conical surface at the inside of the seat 76, a hinge pin 80 to make the hemispheroidal portion 78 mate with the seat 76, a disc spring 82 interposed between the hinge pin 80 and hemispheroidal portion 78, and a cover 84 of the hemispheroidal portion 78.

Next, a second comparative example which is not part the present invention will be described.

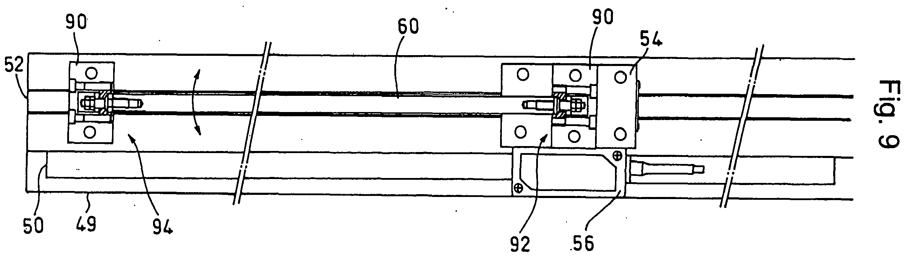

For the second comparative example, as shown in Fig. 9, slide bearing spherical joints 92 and 94 are used as joints at both ends of the link 60 in place of the rod-end bearings 62 and 64 of the first embodiment so that no rotation angle adjusting joints 66 and 68 are necessary. In the figure, reference numeral 90 denotes a bracket for retaining the spherical joint.

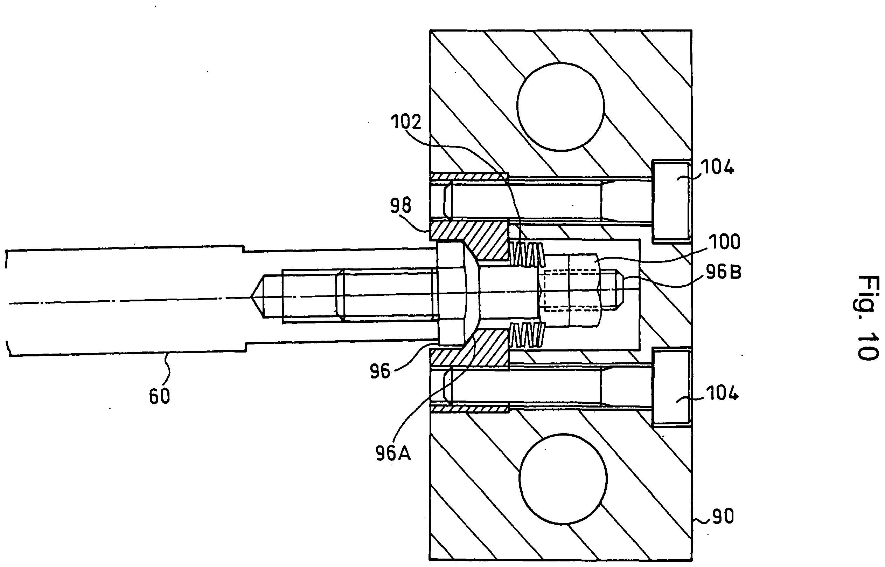

The spherical joint 92, 94 is, as shown in detail in Fig. 10, composed mainly of a spherical portion 96 screwed on the end portion of the link 60, a seat 98 mating with a spherical surface 96A of the spherical portion 96, a nut 100 screwed with a screw 96B provided at the tip of the spherical portion 96, a disc spring 102 interposed between the nut 100 and seat 98, and a fixing bolt 104.

Here, a linear encoder composed of a scale and a detector can be formed of an incremental encoder or an absolute encoder (absolute position encoder). In particular, when this is formed of an absolute encoder, it is possible to detect an absolute position irrespective of a relative speed of the scale and the detector. Therefore, even if a large vibration instantaneously occurs due to a sudden shock as with, for example, a press machine and an extremely high relative speed occurs between the scale and detector, an extremely remarkable effect can be obtained such that it is possible for the absolute encoder to always detect a correct position.

## Claims

1. A displacement measuring device for a vibration machine (40) vibrating in a direction other than a measuring direction comprising:
a scale (50) and a linear motion guide (52) which are separately fixed to one relative displacement member (48);
a detector (56) which is fixed to a slider (54) of the linear motion guide so as to oppose the scale (50) without contact;
a link (60) which freely rotatably couples the slider (54) in a first rotation surface and an other relative displacement member (46) in a second rotation surface;
and
whereby the link (60) freely rotatably coupled to the slider (54) is further movable so as to tilt in a vertical direction with respect to the first rotation surface, or/and the link (60) freely rotatably coupled to the other relative displacement member (46) is further movable so as to tilt in a vertical direction with respect to the second rotation surface, and
wherein a rod-end bearing joint (62, 64) is provided at, at least, one end of the link (60),
**characterized in that**
a rotation angle adjusting joint (66, 68) is provided halfway across the link (60).

2. The displacement measuring device for a vibration machine (40) according to claim 1 wherein the respective rotation axes of the link (60) freely rotatably coupled to the slider (54) in the first rotation surface and the other relative displacement member (46) in the second rotation surface are in a relationship being roughly orthogonal to each other.

3. The displacement measuring device for a vibration machine according to any of Claims 1 or 2, wherein the displacement measuring device is adapted to be used with a press machine (40).

4. The displacement measuring device for a vibration machine (40) according to Claim 3, wherein one of the relative displacement members is an upright support (46), the other is a ram (48).

5. The displacement measuring device for a vibration machine (40) according to any of Claims 1 to 4, wherein an encoder formed of the scale (50) and detector (56) is an absolute encoder.

6. The displacement measuring device for a vibration machine (40) according to any of Claims 1 to 4, wherein an encoder formed of the scale (50) and detector (56) is an incremental encoder.

## Patentansprüche

1. Wegmessvorrichtung für eine Vibrationsmaschine (40), die in einer Richtung vibriert, die nicht die Messrichtung ist, umfassend:
eine Skala (50) und eine lineare Bewegungsführung (52), die getrennt an einem relativen Verschiebungselement (48) fixiert sind;
einen Detektor (56), der an einem Gleiter (54) der linearen Bewegungsführung so fixiert ist, dass er dar Skala (50) ohne Kontakt gegenüberliegt;
eine Verbindung (60), die den Gleiter (54) in einer ersten Rotationsfläche und ein anderes relatives Verschiebungselement (46) in einer zweiten Rotationsfläche frei rotierbar koppelt; und
wobei die Verbindung (60), die an dem Gleiter (54) frei rotierbar gekoppelt ist, weiterhin so beweglich ist, dass sie sich in einer vertikalen Richtung hinsichtlich der ersten Rotationsfläche neigt, oder/und die Verbindung (60), die an dem anderen relativen Verschiebungselement (46) frei rotierbar gekoppelt ist, weiterhin so beweglich ist, dass sie sich in einer vertikalen Richtung hinsichtlich der zweiten Rotationsfläche neigt, und wobei ein Stabende-Lager-Gelenk (62, 64) an zumindest einem Ende der Verbindung (sich) bereitgestellt ist,
**dadurch gekennzeichnet, dass**
ein Rotationswinkeleinstellgelenk (66, 68) auf halben Weg entlang der Verbindung (60) bereitgestellt ist.

2. Wegemessvorrichtung für eine Vibrationsmaschine (40) nach Anspruch 1, wobei die entsprechenden Rotationsachsen der Verbindung (60), die an dem Gleiter (54) in der ersten Rotationsfläche und dem anderen relativen Verschiebungselement (46) in der zweiten Rotationsfläche frei rotierbar gekoppelt sind, sich in einer Bezeigung befinden, die grob orthogonal zueinander ist.

3. Wegemessvorrichtung für eine Vibrationsmaschine nach einem der Ansprüche 1 oder 2, wobei die Wegemessvorrichtung angepasst ist, mit einer Pressmaschine (40) verwendet zu werden.

4. Wegemessvorrichtung für eine Vibrationsmaschine (40) nach Anspruch 3, wobei eines der relativen Verschiebeelemente ein aufrechter Träger (46) und die andere eine Ramme (48) ist.

5. Wegemessvorrichtung für eine Vibrationsmaschine (40) nach einem der Ansprüche 1 bis 4, wobei ein Kodierer, der aus der Skala (50) und dem Detektor (56) gebildet wird, ein Absolutkodierer ist.

6. Wegemessvorrichtung für eine Vibrationsmaschine (49) nach einem der Ansprüche 1 bis 4, wobei ein Kodierer, der aus der Skala (50) und dem Detektor (56) gebildet wird, ein inkrementaler Kodierer ist.

## Revendications

1. Dispositif de mesure de déplacement destiné à une machine vibrante (40) qui vibre dans une direction différente de la direction de mesure, comprenant :
une échelle (50) et un guide de mouvement linéaire (52) qui sont fixés séparément sur un élément de déplacement relatif (48),
un détecteur (56) qui est fixé sur une glissière (54) du guide de mouvement linéaire de sorte à faire face à l'échelle (50) sans contact,
une liaison (60) qui accouple de façon libre en rotation la glissière (54) dans une première surface de rotation et un autre élément de déplacement relatif (46) dans une seconde surface de rotation, et
grâce à ceci, la liaison (60), couplée librement en rotation à la glissière (54), est en outre mobile de sorte à s'incliner dans la direction verticale par rapport à la première surface de rotation, et/ou la liaison (60), couplée librement en rotation à l'autre élément de déplacement relatif (46), est de plus mobile de sorte à s'incliner dans la direction verticale par rapport à la seconde surface de rotation, et
dans lequel un joint de palier d'extrémité de tige (62, 64) est disposé à au moins une première extrémité de la liaison (60),
**caractérisé en ce que**
un joint d'ajustement d'angle de rotation (66, 68) est utilisé à mi-chemin sur la liaison (60).

2. Dispositif de mesure de déplacement destiné à une machine vibrante (40) selon la revendication 1, dans lequel les axes de rotation respectifs de la liaison (60) couplée librement en rotation à la glissière (54) dans la première surface de rotation et à l'autre élément de déplacement relatif (46) dans la seconde surface de rotation sont en relation en étant grossièrement orthogonaux l'un à l'autre.

3. Dispositif de mesure de déplacement destiné à une machine vibrante (40) selon l'une quelconque des revendications 1 et 2, le dispositif de mesure de déplacement étant conçu pour être utilisé avec une presse (40)

4. Dispositif de mesure de déplacement destiné à une machine vibrante (40) selon la revendication 3, dans lequel l'un des éléments de déplacement relatif est un support droit (46) et l'autre est un piston (48).

5. Dispositif de mesure de déplacement destiné à une machine vibrante (40) selon l'une quelconque des revendications 1 à 4, dans lequel un codeur formé de l'échelle (50) et du détecteur (56) est un codeur absolu.

6. Dispositif de mesure de déplacement destiné à une machine vibrante (40) selon l'une quelconque des revendications 1 à 4, dans lequel un codeur formé de l'échelle (50) et du détecteur (56) est un codeur incrémental.
